(19) Europäisches Patentamt
European Patent Office
Office européen des brevets

(11) Veröffentlichungsnummer : **0 016 857**
**B1**

# (12) EUROPÄISCHE PATENTSCHRIFT

(45) Veröffentlichungstag der Patentschrift : **09.06.82**

(51) Int. Cl.³ : **A 01 N 47/18**, A 01 N 31/08 // (A01N47/18, 31/08)

(21) Anmeldenummer : **79103523.1**

(22) Anmeldetag : **19.09.79**

## (54) Mikrobizides Mittel und seine Verwendung.

(30) Priorität : **10.03.79 DE 2909550**

(43) Veröffentlichungstag der Anmeldung : **15.10.80 (Patentblatt 80/21)**

(45) Bekanntmachung des Hinweises auf die Patenterteilung : **09.06.82 Patentblatt 82/23**

(84) Benannte Vertragsstaaten : **AT BE CH DE FR GB IT NL SE**

(56) Entgegenhaltungen :
**DE - A - 1 620 175**
**DE - B - 2 150 219**
**FR - A - 1 580 830**
**GB - A - 1 027 104**
**US - A - 3 824 190**

(73) Patentinhaber : **BAYER AG**
**Zentralbereich Patente, Marken und Lizenzen**
**D-5090 Leverkusen 1, Bayerwerk (DE)**

(72) Erfinder : **Paulus, Wilfried, Dr.**
**Deswatinesstrasse 90**
**D-4150 Krefeld (DE)**
Erfinder : **Genth, Hermann, Dr.**
**Am Heckerhof 60**
**D-4150 Krefeld (DE)**

**EP 0 016 857 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

Mikrobizides Mittel und seine Verwendung

Die Erfindung betrifft neue synergistische Wirkstoffkombinationen aus Benzimidazolylalkylcarbamaten und (2,2'-Dihydroxy-5,5'-dichlor)-diphenyl-methan oder 2-Hydroxydiphenyl.

Aus der DE-OS 1 620 175 ist bekannt, Benzimidazolylalkylcarbamate als Fungizide im Pflanzenschutz und zur fungiziden Ausrüstung technischer Materialien zu verwenden. Ebenso ist bekannt, daß (2,2'-Dihydroxy-5,5'-dichlor)-diphenyl-methan und 2-Hydroxy-diphenyl mikrobizide Wirkung haben (Chemie der Pflanzenschutz- und Schädlingsbekämpfungsmittel, Band 3, Seite 287, Springer Verlag 1976).

In der FR 1 580 830 werden pilzwidrige Mittel auf Basis von 2-Alkanoyl-benzimidazolen beschrieben. Es handelt sich hier lediglich um ein Fungizid.

In der US 3 824 190 werden phenolische Formulierungen beschrieben, die als Desinfektionswirkung verwendet werden können.

Die GB 10 27 104 betrifft die Anwendung einer speziellen Formulierung des bekannten Mikrobizids (5,5'-Dichlor-2,2'-dihydroxy)-diphenylmethan bzw. dessen Alkalisalzes.

Die bekannten Biozide sind in ihrer Wirksamkeit beschränkt und in ihrer Anwendung wenig effektiv.

Es wurden mikrobizide Mittel gefunden, die

a) 1 Gewichtsteil eines Benzimidazolylalkylcarbamates der Formel

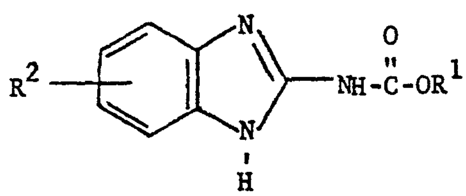

(I)

worin

$R^1$ ein Alkylrest mit 1 bis 4 Kohlenstoffatomen, der gegebenenfalls durch den Rest $—OR^3$ substituiert ist, wo

$R^3$ für einen Alkylrest mit 1 bis 4 Kohlenstoffatomen oder den Phenylrest steht, und

$R^2$ Wasserstoff, ein Alkylrest mit 1 bis 4 Kohlenstoffatomen, Halogen oder die Nitrogruppe bedeuten, und

b) 1 bis 25 Gewichtsteile einer Verbindung der Formel

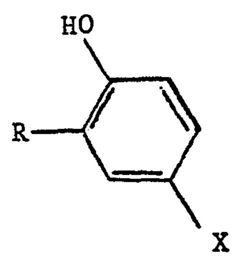

(II)

worin

R für den Phenylrest oder den 2-Hydroxy-5-chlorbenzylrest steht und

X Wasserstoff oder Chlor bedeutet,

enthalten.

Alkylreste ($R^1$, $R^2$ und $R^3$) können geradkettige oder verzweigte Kohlenwasserstoffreste, wie Methyl, Ethyl, Propyl, Isopropyl, Butyl oder Isobutyl, insbesondere Methyl, sein.

Halogene ($R^2$) können Fluor, Chlor, Brom oder Jod, insbesondere Chlor, sein.

Beispielsweise seien die folgenden Benzimidazolylalkylcarbamate genannt: Benzimidazolylmethylcarbamat, 4-Methyl-benzimidazolylmethylcarbamat, 5-Methyl-benzimidazolylmethylcarbamat, Benzimidazolylethylcarbamat, 4-Methyl-benzimidazolylethylcarbamat, 5-Ethyl-benzimidazolylethylcarbamat, Benzimidazolyl-iso-propylcarbamat, 4-Ethyl-benzimidazolyl-iso-propylcarbamat, 5-Methyl-benzimidazolyl-iso-propylcarbamat, 4-Propyl-benzimidazolyl-iso-propylcarbamat, 4-Butyl-benzimidazolyl-iso-propylcarbamat, 4-Iso-butyl-benzimidazolyl-iso-propylcarbamat, Benzimidazolyl-ethylmethoxy-carbamat, 4-Methyl-benzimidazolyl-ethylmethoxycarbamat, 5-Methyl-benzimidazolyl-ethylmethoxy-carbamat, Benzimidazolyl-ethylethoxy-carbamat, Benzimidazolyl-ethylethoxy-carbamat, Benzimidazolyl-ethylpropoxycarbamat, Benzimidazolyl-ethylphenoxy-carbamat, 4-Methyl-benzimidazolyl-ethylphenoxy-carbamat

und 5-Methyl-benzimidazolyl-ethylphenoxy-carbamat.

Bevorzugtes Benzimidazolylalkylcarbamat ist das Benzimidazolylmethylcarbamat.

Es ist selbstverständlich auch möglich, Gemische verschiedener Benzimidazolylalkylcarbamate einzusetzen.

Die Herstellung der Benzimidazolylalkylcarbamate ist bekannt (US 3 010 968).

Die Verbindungen der Formel II können auch in Form von Salzen, bevorzugt Alkalisalze, wie die Natrium- und Kaliumsalze, mit den Benzimidazolylcarbamaten kombiniert werden.

Bevorzugte Verbindungen der Formel II sind 2-Hydroxydiphenyl und (2,2'-Dihydroxy-5,5'-dichlor)-diphenyl-methan.

Der Wirkstoff (2,2'-Dihydroxy-5,5'-dichlor)-diphenyl-methan entsteht durch Behandeln von 1 Mol 4-Chlorbenzol mit 0,5 Mol Formaldehyd in wäßriger Lösung unter Zusatz von Schwefelsäure bei 50 bis 65 °C.

Die Kondensation von Cyclohexanon zu Dianon und dessen katalytische Dehydrierung führt zu 2-Hydroxy-diphenyl.

Die Gewichtsverhältnisse der Wirkstoffe in den Wirkstoffkombinationen können in relativ großen Bereichen schwanken.

Im allgemeinen fällt auf ein Gewichtsteil Benzimidazolylalkylcarbamat 1 bis 25 Gew.-Teile, bevorzugt 2 bis 15 Gew.-Teile, (2,2'-Dihydroxy-5,5'-dichlor)-diphenylmethan oder 2-Hydroxy-diphenyl.

Besonders wirkungsvoll sind Kombinationen von 1 Gew.-Teil Benzimidazolylmethylcarbamat und 2 bis 10 Gew.-Teile (2,2'-Dihydroxy-5,5'-dichlor)-diphenyl-methan oder 2-Hydroxy-diphenyl.

Die Teilchengröße der erfindungsgemäßen Wirkstoffe ist in weiten Grenzen variabel. Im allgemeinen werden Wirkstoffe mit einer Teilchengröße von 100 bis 350 Mikron, bevorzugt von 150 bis 300 Mikron, eingesetzt.

Die erfindungsgemäßen Wirkstoffe können auch in Form ihrer Alkalisalze eingesetzt werden.

Die erfindungsgemäßen Wirkstoffkombinationen weisen eine starke Wirkung auf Mikroorganismen auf. Als Mikroorganismen seien beispielsweise Bakterien, Hefen, Pilze und Algen genannt.

Als Bakterien, Hefen und Pilze seien beispielsweise genannt : Bacillus subtilis, Bacterium vulgare, Escherichia coli, Staphylococcus aureus, Alternaria tenuis, Aspergillus niger, Candida albicans, Candida crusei, Chaetomium globosum, Coniophora cerebella, Lentinus tigrinus, Penicillium glaucum, Polyporus versicolor, Pullularia pullulans, Rhizopus nigricans, Trichoderma viride, Trichophyton pedis, Torula utilis.

Als Algen seien beispielsweise genannt : Euglena gracilis Klebs, Oscillatoria geminata Meneghini, Phaedoactylum tricornutum Bohlin und Stichococcus bacillaris Naegili.

Die Erfindung betrifft Wirkstoffkombinationen zum Schutz von technischen Materialien gegen mikrobiellen Abbau. Technische Materialien sind z.B. Klebstoffe, Leime, Papiere und Kartone, Textilien, Leder, Holz, Anstrichmittel, Putze und Gebindeinhalte, die durch mikrobielle Einwirkung geschädigt oder zerstört werden können. Die erfindungsgemäßen Wirkstoffgemische sind besonders zur Leim-, Textil-, Papier- und Holzkonservierung geeignet.

Die neuen Wirkstoffkombinationen können in die üblichen Formulierungen übergeführt werden, wie z.B. Lösungen, Suspensionen, Pasten und Pulver.

Die neuen Wirkstoffkombinationen können als solche in Form ihrer Formulierungen sowie der daraus bereiteten Anwendungsformen angewendet werden. Die Anwendung geschieht in üblicher Weise, z.B. durch homogene Verteilung im zu schützenden Material oder durch Imprägnieren, Beschichten oder Besprühen von technischen Materialien.

Die Menge der eingesetzten Wirkstoffkombinationen ist von der Art und dem Vorkommen der Mikroorganismen, der Keimzahl und von dem Medium abhängig. Die optimale Einsatzmenge kann bei der Anwendung jeweils durch Testreihen ermittelt werden. Im allgemeinen ist es jedoch ausreichend, 0,05 bis 1,0 % der Wirkstoffgemische einzusetzen.

Die Wirkung der Benzimidazolylalkylcarbamate und von (2,2'-Dihydroxy-5,5'-dichlor)-diphenyl-methan sowie von 2-Hydroxy-diphenyl in Einzelverbindungen gegen Mikroorganismen ist beschränkt, da ihr Wirkungsspektrum lückenhaft ist. Zur Lösung dieses problems ist bereits eine Wirkstoffkombination aus Benzimidazolylmethylcarbamat und 3,5-Dimethyl-tetrahydro-1,3,5-thiadiazin-2-thion bekannt (DE-AS 2 150 219). Nachteilig an dieser bekannten Wirkstoffkombination ist, daß das 3,5-Dimethyl-tetrahydro-1,3,5-thiadiazin-2-thion als Formaldehyd-Depotstoff nur wenig beständig ist. Ähnliches gilt für die Wirkstoffkombination (2,2'-Dihydroxy-5,5'-dichlor)-diphenyl-methan oder 2-Hydroxy-diphenyl und Benzylalkoholmono(poly)-hemiformal (Proceed. 3. Int. Biodegrad. Symp. 1975, Appl. Science Publishers Ltd. London (1975), Seiten 1 075 bis 1 082).

Die erfindungsgemäßen Wirkstoffkombinationen zeichnen sich hingegen durch Stabilität aus und haben vorteilhafterweise ein breites Wirkungsspektrum. Die Anwendung erfindungsgemäßer Wirkstoffgemische führt in Abwässern nicht zu Konzentrationen, die die biologische Klärung stören.

Überraschenderweise ist die mikrobizide Wirksamkeit der erfindungsgemäßen Wirkstoffkombinationen wesentlich höher als die Summe der Wirkungen der einzelnen Wirkstoffe. Es liegt also ein synergistischer Effekt vor.

Vorteilhafterweise ist es möglich, mit Hilfe der erfindungsgemäßen Wirkstoffkombination mikrobizidhaltige Trockenleime herzustellen, ohne daß Wirkstoffverluste und damit verbundene Geruchsbelästigungen und Umweltbelastungen, eintreten, wie das beispielsweise bei Mitteln auf Pentachlorphenolbasis der Fall ist. Verfärbungsrisiken, Geruch und Zersetzung bei der Trocknung alkalischer Leimslurries begrenzen auch die Verwendbarkeit von Dithiocarbamaten, wie Zink-dimethyl-dithiocarbamat oder Tetramethylthiuramdisulfid.

Vorteilhafterweise können die erfindungsgemäßen Wirkstoffkombinationen auch bei der Herstellung antimikrobiellen Papiermaterials, wie Seifeneinwickler und Handtuchkrepp, eingesetzt werden, wo neben guter und breiter mikrobizider Wirkung, Farb- und Geruchlosigkeit, Thermostabilität, Unlöslichkeit in Wasser, Hydrolysestabilität, geringe Flüchtigkeit und Farbstabilität gefordert wird. Solche Forderungen werden durch halogenierte phenolische Wirkstoffe, die wasserdampfflüchtig und wasserlöslich sind, und Mittel auf Dithiocarbamat-Basis, die Weißgradminderungen hervorrufen können, nicht erfüllt.

Das Wirkungsspektrum der erfindungsgemäßen Wirkstoffkombinationen umfaßt Bläuepilze (z.B. Pullularia pullulans), Moderfäule verursachende Pilze (z.B. Chaetomium globosum), aber auch holzzerstörende Pilze (z.B. Coniophora cerebella). Die Wirkstoffkombinationen eignen sich daher zum Schutz von gesägtem Holz, wobei sich neben dem breiten Wirkungsspektrum auch die geringe Toxizität der Wirkstoffkombinationen ($LD_{50}$ oral ca. 3 000 mg/kg Ratte) besonders vorteilhaft auswirkt. Zum Vergleich : Die $LD_{50}$ oral von Natrium-pentachlor = phenolat beträgt 270 mg/kg Ratte.

Die erfindungsgemäßen Wirkstoffkombinationen ermöglichen vorteilhafterweise, die bisher verfügbaren mikrobiziden Mittel durch effektivere zu ersetzen und die zur Bekämpfung von Mikroorganismen erforderliche Biozidmenge zu reduzieren.

## Beispiel 1

Bezeichnungen : A = (2,2'-Dihydroxy-5,5'-dichlor)-diphenyl-methan.
B = Benzimidazolylmethylcarbamat.

Zur Demonstration der synergistischen Wirkung werden von A und B die minimalen Hemmkonzentrationen (MHK) in Agarnährböden ermittelt. Die MHK-Werte von A und B werden verglichen mit den MHK-Werten von Gemischen A/B.

Nach der von Kull et al. (F.C. Kull, P.C. Eismann, H.D. Sylvestrowicz, R.L. Mayer, Applied Microbiol., *9*, 538 bis 541, 1961) beschriebenen Methode wird der Synergismus ermittelt. Dabei gelten folgende Bezeichnungen :

$$Q_A/Q_a + Q_B/Q_b = X$$

X = 1 bedeutet Additivität.
X > 1 bedeutet Antagonismus.
X < 1 bedeutet Synergismus.

$Q_a$ = Konzentration von Substanz A, die die MHK darstellt.
$Q_b$ = Konzentration von Substanz B, die die MHK darstellt.
$Q_A$ = Menge von Substanz A in der Konzentration von A/B, die das Mikrobenwachstum unterbindet.
$Q_B$ = Menge von Substanz B in der Konzentration von A/B, die das Mikrobenwachstum unterbindet.

Das Ergebnis ist in der folgenden Tabelle festgehalten.

Tabelle

Testorganismus Aspergillus niger

| Gew.-verh. A/B | MHK i. mg/l | $Q_a$ | $Q_A$ | $Q_b$ | $Q_B$ | X |
|---|---|---|---|---|---|---|
| 100/0 | 20 | 20 | 20 | 2,5 | — | 1 |
| 20/1 | 2 | 20 | 1,9 | 2,5 | 0,1 | 0,13 |
| 10/1 | 2 | 20 | 1,8 | 2,5 | 0,2 | 0,16 |
| 6/1 | 2 | 20 | 1,7 | 2,5 | 0,3 | 0,20 |
| 2/1 | < 1 | 20 | < 0,7 | 2,5 | < 0,3 | < 0,17 |
| 1/1 | < 1 | 20 | < 0,5 | 2,5 | < 0,5 | < 0,23 |
| 1/2 | < 1 | 20 | < 0,3 | 2,5 | < 0,7 | < 0,29 |
| 0/100 | 2,5 | 20 | — | 2,5 | 2,5 | 1 |

(Fortsetzung)

| Gew.-verh. A/B | MHK i. mg/l | $Q_a$ | $Q_A$ | $Q_b$ | $Q_B$ | X |
|---|---|---|---|---|---|---|
| | | | Testorganismus Coniophora cerebella | | | |
| 100/0 | 10 | 10 | 10 | 2 000 | — | 1 |
| 20/1 | < 1 | 10 | < 0,95 | 2 000 | < 0,5 | < 0,1 |
| 10/1 | < 1 | 10 | < 0,9 | 2 000 | < 0,1 | < 0,1 |
| 6/1 | < 1 | 10 | < 0,86 | 2 000 | < 0,14 | < 0,1 |
| 2/1 | 2 | 10 | 1,4 | 2 000 | 0,6 | 0,14 |
| 1/1 | 5 | 10 | 2,5 | 2 000 | 2,5 | 0,25 |
| 1/2 | 5 | 10 | 1,7 | 2 000 | 3,3 | 0,17 |
| 0/100 | 2 000 | 10 | — | 2 000 | 2 000 | 1 |
| | | | Testorganismus Chaetomium globosum | | | |
| 100/1 | 50 | 50 | 50 | 0,4 | — | 1 |
| 20/1 | 3,5 | 50 | 0,33 | 0,4 | 0,17 | 0,49 |
| 10/1 | < 1 | 50 | < 0,9 | 0,4 | < 0,1 | < 0,27 |
| 6/1 | < 1 | 50 | < 0,86 | 0,4 | < 0,14 | < 0,36 |
| 2/1 | < 1 | 50 | < 0,7 | 0,4 | < 0,3 | < 0,76 |
| 0/100 | 0,4 | 50 | — | 0,4 | 0,4 | 1 |
| | | | Testorganismus Alternaria tenuis | | | |
| 100/0 | 20 | 20 | 20 | 5 000 | — | 1 |
| 10/1 | < 20 | 20 | < 18,2 | 5 000 | < 1,8 | < 0,91 |
| 6/1 | < 20 | 20 | < 17,3 | 5 000 | < 2,7 | < 0,87 |
| 1/1 | < 20 | 20 | < 10 | 5 000 | < 10 | < 0,5 |
| 1/2 | 50 | 20 | 16,7 | 5 000 | 33,3 | < 0,84 |
| 0/100 | 5 000 | 20 | — | 5 000 | 5 000 | 1 |
| | | | Testorganismus Trichoderma vivide | | | |
| 100/0 | 50 | 50 | 50 | 2,5 | — | 1 |
| 20/1 | 35 | 50 | 33,3 | 2,5 | 1,7 | 0,7 |
| 6/1 | 7,5 | 50 | 6,4 | 2,5 | 1,1 | 0,57 |
| 2/1 | 2 | 50 | 1,3 | 2,5 | 0,7 | 0,31 |
| 1/1 | 1 | 50 | 0,5 | 2,5 | 0,5 | 0,21 |
| 1/2 | 1 | 50 | 0,7 | 2,5 | 1,3 | 0,53 |
| 0/100 | 2,5 | 50 | — | 2,5 | 2,5 | 1 |
| | | | Testorganismus Pullularia pullulans | | | |
| 100/0 | 20 | 20 | 20 | 0,25 | — | 1 |
| 10/1 | < 1 | 20 | < 0,9 | 0,25 | < 0,1 | < 0,45 |
| 6/1 | < 1 | 20 | < 0,86 | 0,25 | < 0,14 | < 0,6 |
| 0/100 | 0,25 | 20 | — | 0,25 | 0,25 | 1 |

## Beispiel 2

Bezeichnungen : A = (2,2'-Dihydroxy-5,5'-dichlor)-diphenyl-methan.
B = Benzimidazolylmethylcarbamat.

Ein Trockenleim auf Stärkebasis wird hergestellt aus einem Leimslurry, der bezogen auf Trockenleim 0,3 % einer Mischung mit A/B = 6/1 enthält. Der Trockenleim wird im Vergleich zu einem Mikrobizidfreien im Verhältnis 1 : 25 mit Wasser verdünnt. Nach 3-tägiger Lagerung bei Raumtemperatur ist der Microbizid-freie Leimansatz dünnflüssig und unbrauchbar (Keimzahl nach 7 Tagen : 2,4 × $10^6$/g), während der das erfindungsgemäße Mittel enthaltende Leimansatz keinen Viskositätsverlust aufweist (Keimzahl nach 7 Tagen : Null).

Von dem Mikrobizid-haltigen Leimansatz werden 1 000 μ-Schichten auf Filterpapier aufgestrichen. Die Prüflinge werden auf Nährböden gelegt, die mit Schimmelpilzen (Aspergillus niger, Chaetomium globosum, Trichoderma viride) kontaminiert sind. Lagerung bei Raumtemperatur.

Unter diesen Bedingungen verpilzen Mikrobizid-freie Leimschichten innerhalb 1 Woche vollkommen ; die o.g. Leimschichten bleiben aber pilzfrei, d.h. sie sind schimmelfest.

Zum Vergleich wurde ferner ein Leimslurry, der bezogen auf Trockenleim 0,45 % 3-Methyl-4-chlorphenol und 0,15 % Zinkdimethyldithiocarbamat enthält, hergestellt und wie oben angegeben geprüft. Ergebnis : Kein Viskositätsabbau ; Schimmelfestigkeit mangelhaft.

## Beispiel 3

Bezeichnungen : A = (2,2'-Dihydroxy-5,5'-dichlor)-diphenyl-methan.
B = Benzimidazolylmethylcarbamat.

In einem Papierstoffbrei (Stoffdichte 1 %, pH-Wert 4,8) folgender Zusammensetzung :

39,9 % gebleichter Sulfit-Zellstoff
39,9 % gebleichter Birkensulfat-Zellstoff
0,2 % eines handelsüblichen Aufhellers
2 % eines handelsüblichen Harzleimes
15 % Clay
3 % Alaun

werden, bezogen auf Papiergewicht (90 bis 100 g/m$^2$) 0,5 % A/B = 6/1, homogen verteilt. Das aus diesem Stoffbrei hergestellte Papier ist schimmelfest ; das Stoffführungssystem bleibt während der Papierherstellung schleimfrei, so daß sich der Einsatz anderer Schleimbekämpfungsmittel erübrigt.

Die Schimmelfestigkeit und die antimikrobielle Wirkung des auf diese Weise erhaltenen Seifeneinwickelpapieres wird wie folgt überprüft :

Runde Papierprüflinge (Durchmesser 4 cm) werden in Petrischalen auf einen Nährboden gelegt, der zuvor mit den Testpilzen Chaetomium globosum Kunze und Aspergillus niger infiziert wird. Nach 8 bis 14 Tagen Lagerung bei 30 °C und 90 bis 95 % relativer Luftfeuchtigkeit ist wirkstofffreies Papier von den Testpilzen völlig überwachsen, während das wie oben angegeben hergestellte Papier auch unter diesen extremen Bedingungen pilzfrei bleibt ; um die Prüflinge bilden sich zudem Hemmhöfe.

Überschichtet man die Prüflinge mit einer Nährbodenschicht, die mit Bakterien (Staphylococcus aureus) kontaminiert ist, so wird nach 3 bis 5 Tagen Lagerung unter den gleichen Bedingungen die antibakterielle Wirkung des Papiers in Form einer bewuchsfreien Zone, die sich über und um die Prüflinge bildet, sichtbar.

Gibt man hingegen wie üblich, da bisher brauchbare Alternativen fehlen, 0,5 % Natriumpentachlorphenolat (bezogen auf Papiergewicht) in den Stoffbrei, treten Wirkstoffverluste bis über 50 % ein (ca. 25 % finden sich im Abwasser und ca. 25 % in der Abluft). Folgen sind : Abwasserprobleme (das Abwasser ist fischtoxisch), Abluftprobleme (Geruchsbelästigungen, Schleimhautreizungen, mangelhafte Schimmelfestigkeit.

## Beispiel 4

Bezeichnungen : A = (2,2'-Dihydroxy-5,5'-dichlor)-diphenyl-methan
B = Benzimidazolylmethylcarbamat.

Ein handelsübliches Tapetenrohpapier wird mit einem Stärkeleim beschichtet, der, bezogen auf Trockenleim, 0,3 % A/B = 6/1 enthält. Papiergewicht 80 g/m$^2$. Klebstoffschicht 8 g/m$^2$ (nach Trocknung). Das so hergestellte selbstklebende Tapetenrohpapier ist — wie die folgende Prüfung zeigt — schimmelfest :

Prüflinge (Durchmesser 4,5 cm) werden auf Agarnährböden in Petrischalen gelegt, die zuvor mit Schimmelpilzen (u.a. Trichoderma viride, Chaetomium globosum Kunze, Aspergillus niger), isoliert von verschimmelten Tapeten, infiziert werden. Nach einwöchiger Lagerung bei 30 °C und 90 bis 95 % relativer Luftfeuchte sind die Prüflinge noch pilzfrei. Ein Tapetenrohpapier mit einer wirkstofffreien Klebstoffschicht wird unter den gleichen Bedingungen in dieser Zeit völlig von den Testpilzen überwachsen.

## Beispiel 5

Bezeichnungen : A = (2,2'-Dihydroxy-5,5'-dichlor)-diphenyl-methan
B = Benzimidazolylmethylcarbamat.

Eine Mischkultur von Grün-, Blau-, Braun- und Kieselalgen (Stichococcus bacillaris Naegeli, Euglena gracilis Klebs, Chlorella pyrenoidosa Chick, Phormidium foredarum Gromont, Oscillatoria geminata

Meneghini und Phaedodactylum tricornutum Bohlin) wird unter Durchperlen von Luft in Allen's Nährlösung (Arch. Mikrobiol. *17*, 34 bis 53, (1952)), die auf 4 l steriles Wasser, 0,2 g Ammoniumchlorid, 4,0 g Natriumnitrat, 1,0 g Dikaliumhydrogenphosphat, 0,2 g Calciumchlorid, 2,05 g Magnesiumsulfat und 0,02 g Eisenchlorid enthält, gegeben. Nach 2 Wochen ist die Nährlösung durch intensives Algenwachstum tief grün-blau gefärbt. Das Absterben der Algen nach Zugabe der erfindungsgemäßen Wirkstoffe, erkennt man an dem Entfärben der Nährlösung.

Ein erfindungsgemäßes Gemisch bestehend aus 6 Gew.-Teilen (2,2'-Dihydroxy-5,5'-dichlor)-diphenyl-methan und 1 Gew.-Teil Benzimidazolylmethylcarbamat wirkt in einer Konzentration von 50 mg/l abtötend auf die o.g. Algen.

## Beispiel 6

Bezeichnungen : A = 2-Hydroxy-diphenyl
B = Benzimidazolylmethylcarbamat.

Zur Demonstration der synergistischen Wirkung wird wie in Beispiel 1 verfahren.
Das Ergebnis ist in der folgenden Tabelle festgehalten.

Tabelle

Testorganismus Aspergillus niger

| Gew.-verh. A/B | MHK i. mg/l | $C_A$ | $Q_a$ | $Q_B$ | $Q_b$ | X |
|---|---|---|---|---|---|---|
| 100/0 | 50 | 50 | 50 | — | 2,5 | 1 |
| 20/1 | 7,5 | 6,64 | 50 | 0,36 | 2,5 | 0,28 |
| 10/1 | < 1 | < 0,9 | 50 | < 0,1 | 2,5 | < 0,1 |
| 6/1 | < 1 | < 0,86 | 50 | < 0,14 | 2,5 | < 0,1 |
| 2/1 | < 1 | < 0,67 | 50 | < 0,33 | 2,5 | < 0,16 |
| 1/1 | < 1 | < 0,5 | 50 | < 0,5 | 2,5 | < 0,2 |
| 1/2 | < 1 | < 0,33 | 50 | < 0,67 | 2,5 | < 0,28 |
| 0/100 | 2,5 | — | 50 | 2,5 | 2,5 | 1 |

Testorganismus Coniophora cerebella

| Gew.-verh. A/B | MHK i. mg/l | $C_A$ | $Q_a$ | $Q_B$ | $Q_b$ | X |
|---|---|---|---|---|---|---|
| 100/0 | 50 | 50 | 50 | — | 2 000 | 1 |
| 20/1 | 50 | 47,6 | 50 | 2,4 | 2 000 | 0,95 |
| 10/1 | 50 | 45,5 | 50 | 4,5 | 2 000 | 0,91 |
| 6/1 | 50 | 42,9 | 50 | 7,1 | 2 000 | 0,86 |
| 2/1 | 50 | 33,3 | 50 | 16,7 | 2 000 | 0,67 |
| 1/1 | 50 | 25 | 50 | 25 | 2 000 | 0,51 |
| 1/2 | 100 | 33 | 50 | 67 | 2 000 | 0,69 |
| 0/100 | 2 000 | — | 50 | 2 000 | 2 000 | 1 |

Testorganismus Chaetomium globosum

| Gew.-verh. A/B | MHK i. mg/l | $C_A$ | $Q_a$ | $Q_B$ | $Q_b$ | X |
|---|---|---|---|---|---|---|
| 100/0 | 50 | 50 | 50 | — | 0,4 | 1 |
| 20/1 | 2 | 1,9 | 50 | 0,1 | 0,4 | 0,29 |
| 10/1 | < 1 | < 0,9 | 50 | < 0,1 | 0,4 | < 0,27 |
| 6/1 | < 1 | < 0,86 | 50 | < 0,14 | 0,4 | < 0,38 |
| 2/1 | < 1 | < 0,67 | 50 | < 0,33 | 0,4 | < 0,84 |
| 0/100 | 0,4 | — | 50 | 0,4 | 0,4 | 1 |

Testorganismus Trichoderma viride

| Gew.-verh. A/B | MHK i. mg/l | $C_A$ | $Q_a$ | $Q_B$ | $Q_b$ | X |
|---|---|---|---|---|---|---|
| 100/0 | 75 | 75 | 75 | — | 2,5 | 1 |
| 20/1 | 10 | 9,52 | 75 | 0,48 | 2,5 | 0,32 |
| 10/1 | 5 | 4,54 | 75 | 0,46 | 2,5 | 0,25 |
| 6/1 | 5 | 4,29 | 75 | 0,71 | 2,5 | 0,34 |

(Fortsetzung)

| Gew.-verh. A/B | MHK i. mg/l | $Q_A$ | $Q_a$ | $Q_B$ | $Q_b$ | X |
|---|---|---|---|---|---|---|
| 2/1 | < 1 | < 0,67 | 75 | < 0,33 | 2,5 | < 0,14 |
| 1/1 | < 1 | < 0,5 | 75 | < 0,5 | 2,5 | < 0,21 |
| 1/2 | < 1 | < 0,33 | 75 | < 0,67 | 2,5 | < 0,27 |
| 0/100 | 2,5 | — | 75 | 2,5 | 2,5 | 1 |
| Testorganismus Pullularia pullulaus | | | | | | |
| 100/0 | 50 | 50 | 50 | — | 0,25 | 1 |
| 20/1 | 3,5 | 3,33 | 50 | 0,17 | 0,25 | 0,75 |
| 10/1 | < 1 | < 0,9 | 50 | < 0,1 | 0,25 | < 0,42 |
| 6/1 | < 1 | < 0,86 | 50 | < 0,1 | 0,25 | < 0,58 |
| 0/100 | 0,25 | — | 50 | 0,25 | 0,25 | 1 |

**Ansprüche**

1. Mikrobizide Mittel, dadurch gekennzeichnet, daß sie
a) 1 Gewichtsteil eines Benzimidazolylalkylcarbamates der Formel

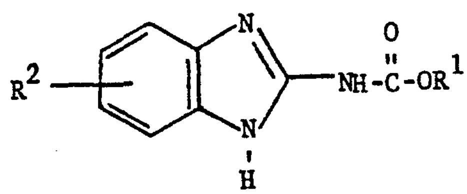

(I)

worin
$R^1$ ein Alkylrest mit 1 bis 4 Kohlenstoffatomen, der gegebenenfalls durch den Rest $-OR^3$ substituiert ist,
wo
$R^3$ für einen Alkylrest mit 1 bis 4 Kohlenstoffatomen oder den Phenylrest steht und
$R^2$ Wasserstoff, einen Alkylrest mit 1 bis 4 Kohlenstoffatomen, Halogen oder die Nitrogruppe bedeuten und
b) 1 bis 25 Gewichtsteile einer Verbindung der Formel

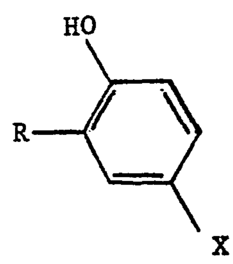

(II)

worin
R für den Phenylrest oder den 2-Hydroxy-5-chlorbenzylrest steht und
X Wasserstoff oder Chlor bedeutet,
enthalten.

2. Mikrobizide Mittel nach Anspruch 1, dadurch gekennzeichnet, daß sie Benzimidazolylmethylcarbamat und (2,2'-Dihydroxy-5,5'-dichlor)-diphenyl-methan oder 2 Hydroxy-diphenyl enthalten.

3. Verwendung von mikrobiziden Mitteln nach Anspruch 1 zum Schutz von technischen Materialien gegen mikrobiellen Abbau.

4. Verwendung von mikrobiziden Mitteln nach Anspruch 1 zur Konservierung von Leim, Textilien, Papier und Holz.

**Claims**

1. Microbicidal agents, characterised in that they contain

a) 1 part by weight of an alkyl benzimidazolylcarbamate of the formula

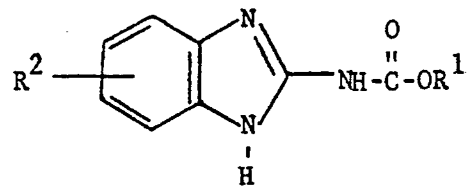

(I)

wherein

$R^1$ denotes an alkyl radical with 1 to 4 carbon atoms, which is optionally substituted by the radical $-OR^3$,

where

$R^3$ represents an alkyl radical with 1 to 4 carbon atoms or the phenyl radical, and

$R^2$ denotes hydrogen, an alkyl radical with 1 to 4 carbon atoms, halogen or the nitro group, and

b) 1 to 25 parts by weight of a compound of the formula

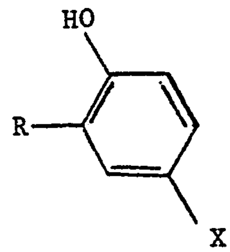

(II)

wherein

R represents the phenyl radical or the 2-hydroxy-5-chlorobenzyl radical and

X denotes hydrogen or chlorine.

2. Microbicidal agents according to Claim 1, characterised in that they contain methyl benzimidazolylcarbamate and (2,2'-dihydroxy-5,5'-dichloro)-diphenyl-methane or 2-hydroxy-diphenyl.

3. Use of microbicidal agents according to Claim 1 for protecting industrial materials against microbial degradation.

4. Use of microbicidal agents according to Claim 1 for preserving size, textiles, paper and wood.

**Revendications**

1. Agents microbicides caractérisés en ce qu'ils contiennent

a) une partie en poids d'un benzimidazolylalkylcarbamate et

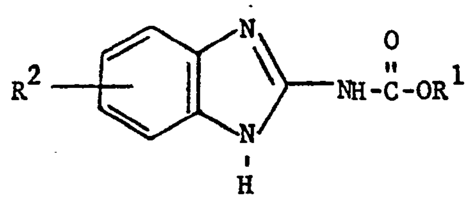

(I)

dans laquelle

$R^1$ représente un reste alkyle en $C_1$-$C_4$, qui peut éventuellement être substitué par le reste $-OR^3$, où

$R^3$ représente un reste alkyle en $C_1$-$C_4$ ou le reste phényle, et

$R^2$ représente l'hydrogène, un reste alkyle en $C_1$-$C_4$, un halogène ou le groupe nitro, et

b) 1 à 25 parties en poids d'un composé de formule

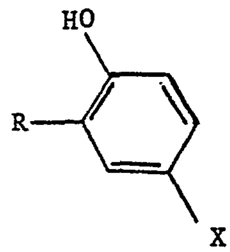

(II)

dans laquelle

R représente le reste phényle ou le reste 2-hydroxy-5-chlorobenzyle, et

X représente l'hydrogène ou le chlore.

2. Agents microbicides selon la revendication 1, caractérisés en ce qu'ils contiennent du benzimidazolylméthylcarbamate et du 2,2'-dihydroxy-5,5'-dichlorodiphénylméthane ou du 2-hydroxydiphényle.

3. Utilisation d'agents microbicides selon la revendication 1 pour la protection de matériaux techniques contre la dégradation microbienne.

4. Utilisation d'agents microbicides selon la revendication 1 pour la conservation de la colle, des textiles, du papier et du bois.